# NEUE EUROPÄISCHE PATENTSCHRIFT

(11) **EP 1 370 348 B2**
(45) Veröffentlichungstag und Bekanntmachung des Hinweises auf die Entscheidung über den Einspruch: **29.11.2006**
(45) Hinweis auf die Patenterteilung: 30.06.2004
(21) Anmeldenummer: 02729792.8
(22) Anmeldetag: 15.03.2002
(51) Int. Cl.: B01D 63/06, B01D 63/02, B01D 53/22, B29C 70/76

(54) **VERFAHREN ZUR HERSTELLUNG EINES HOHLFASER- ODER KAPILLARMEMBRANMODULS**
METHOD FOR PRODUCING A HOLLOW FIBRE MEMBRANE MODULE OR A CAPILLARY MEMBRANE MODULE
PROCEDE DE PRODUCTION D'UN MODULE MEMBRANAIRE DE FIBRES CREUSES OU DE CAPILLAIRES

(30) Priorität: 16.03.2001 DE 10112863
(43) Veröffentlichungstag der Anmeldung: 17.12.2003
(73) Patentinhaber: Fraunhofer-Gesellschaft zur Förderung der angewandten Forschung e.V., 80686 München (DE)
(72) Erfinder: STROH, Norbert, 71106 Magstadt (DE); STEIN-Roeder, Katja, 75382 Althengstett (DE); HÖFLER, Thomas, 81475 München (DE); HERTERICH, Uwe, 70327 Stuttgart (DE)
(86) Internationale Anmeldenummer: PCT/DE2002/000941
(87) Internationale Veröffentlichungsnummer: WO 2002/074423

(56) Entgegenhaltungen:
- EP-A- 0 938 921
- EP-A- 0 941 759
- DE-A- 4 209 405
- DE-A1- 19 860 056
- US-A- 5 194 154
- US-A- 5 198 007

## Beschreibung

### Technisches Anwendungsgebiet

Die vorliegende Erfindung betrifft ein Verfahren zur Herstellung eines Hohlfaser- oder Kapillarmembranmoduls, bei dem Hohlfasern oder Kapillaren aus einem keramischen oder keramikhaltigen Material in eine zur Aufnahme der Hohlfasern oder Kapillaren strukturierte Form eingebracht und in der Form mit einer Vergussmasse vergossen werden.

Unter Hohlfasern werden in der vorliegenden Anmeldung rohrförmige Körper mit Außendurchmessern im Bereich von etwa > 10 µm bis 0,5 mm verstanden, unter Kapillaren derartige Körper mit Außendurchmessern zwischen etwa 0,5 und 3 mm.

Das Verfahren findet in erster Linie in der Filtrations- und Separationstechnik Anwendung. Bei diesen Techniken werden unter anderem anorganische Membranen in Form von Modulen als Trennwerkzeuge für die Flüssigfiltration sowie die Gasseparation eingesetzt. Das mit dem vorliegenden Verfahren hergestellte Hohlfaser- oder Kapillarmembranmodul kann hierbei zur Separation bzw. Aufreinigung von Gasen und Dämpfen, insbesondere bei Hochtemperaturanwendungen, sowie für die Flüssigfiltration zur Mikro-, Ultra- und Nanofiltration sowie als Membranreaktor eingesetzt werden.

### Stand der Technik

Aus der EP 0 941 759 A1 ist ein Verfahren zur Herstellung eines Hohlfasermembranmoduls bekannt, bei dem gesinterte Hohlfasern in eine Form eingebracht und in dieser Form mit einem Vergussmaterial vergossen werden. Als Vergussmaterial wird eine keramikhaltige Masse eingesetzt, die anschließend in einem geeigneten Temperaturschritt ausgehärtet bzw. verfestigt wird. Die Form zur Aufnahme der Hohlfasern ist als Lochplatte ausgebildet, die anschließend mit den darin vergossenen Fasern in ein Gehäuse eingepasst wird.

Die Herstellung eines Hohlfasermembranmoduls nach dem Verfahren dieser Druckschrift gestaltet sich jedoch schwierig, da gesinterte Hohlfasern eine den Keramiken eigene hohe Bruchempfindlichkeit aufweisen. Derartige gesinterte Hohlfasern sind schlecht handhabbar, so dass das Einbringen in die Öffnungen der als Lochplatte ausgeführten Form schwierig ist und zu Hohlfaserbrüchen führen kann.

Ein weiteres Verfahren zur Herstellung eines Hohlfasermembranmoduls ist aus der EP 0 938 921 A1 bekannt. Bei diesem Verfahren wird ein Bündel gesinterter Hohlfasern in eine zylindrische Form eingebracht und in dieser Form unter Beaufschlagung des Vergussmaterials mit Ultraschall vergossen.

Auch bei diesem Verfahren kann es jedoch sehr leicht zu Hohlfaserbrüchen kommen.

Aus der DE 42 09 405 A1 ist ein Verfahren zur Herstellung von Mikro- und Ultrafiltrationsmembranen aus Keramik bekannt, bei dem eine durch dünnwandige Rohre gebildete Membran gleichzeitig mit der Membranhülle in einer Vakuumstrangpresse mit dem gleichen Werkzeug ausgeformt wird. Die Kanalenden der Membran werden hierbei im Rohzustand oder nach dem Sintern der Anordnung verschlossen. Der wesentliche Aspekt des in der Druckschrift offenbarten Verfahrens besteht in der Herstellung einer zusammenhängenden Anordnung aus mehreren über Stege verbundenen dünnwandigen Rohren mit einer diese umgebenden Membranhülle.

Die Aufgabe der vorliegenden Erfindung besteht darin, ein Verfahren zur Herstellung eines Hohlfaser- oder Kapillarmembranmoduls anzugeben, das einfach und mit verminderter Bruchgefahr der Hohlfasern oder Kapillaren durchführbar ist.

### Darstellung der Erfindung

Die Aufgabe wird mit dem Verfahren gemäß den Patentanspruch 1 gelöst. Vorteilhafte Ausgestaltungen des Verfahrens sind Gegenstand der Unteransprüche.

Beim vorliegenden Verfahren zur Herstellung eines Hohlfaser- oder Kapillarmembranmoduls werden Hohlfasern oder Kapillaren aus einem keramischen oder keramikhaltigen Material in ungesintertem Zustand, d. h. als Grünfasern, in eine zur Aufnahme der Hohlfasern oder Kapillaren strukturierte Form eingebracht. Die Hohlfasern oder Kapillaren werden erst in dieser Form in einem thermischen Prozessschritt gesintert. Die Hohlfasern oder Kapillaren werden in der Form entweder vor oder nach dem Sintern mit einer Vergussmasse vergossen, die diese mit der Form verbindet. Dieser Vergussvorgang ist dem Fachmann unter dem Begriff Potten bekannt, die Vergussmasse wird als Pottungsmasse bezeichnet. Die Pottungsmasse wird anschließend ausgehärtet bzw. verfestigt, so dass ein Hohlfaser- bzw. Kapillarmembranmodul entstanden ist, das in ein Gehäuse einbringbar und in technischen Anlagen einsetzbar ist.

Die Verfestigung der Pottungsmasse kann beispielsweise durch einen thermischen Prozessschritt erfolgen. Bei Einsatz eines keramischen Materials als Pottungsmasse kann daher die Sinterung der Hohlfasern bzw. Kapillaren und die Verfestigung der Pottungsmasse mit dem gleichen thermischen Prozessschritt erfolgen. Diese Technik wird als Cofiring bezeichnet.

Bei dem vorliegenden Verfahren werden somit die Hohlfasern bzw. Kapillaren nicht im gesinterten Zustand, sondern im Grünzustand in eine strukturierte Form eingebracht bzw. eingelegt. Diese Form ist Bestandteil des späteren Hohlfaser- bzw. Kapillarmembranmoduls und derart ausgeformt, dass die Hohlfasern bzw. Kapillaren darin aufgenommen werden können. Die Form kann beispielsweise aus einer porösen Keramik oder anderen anorganischen Materialien, wie beispielsweise Metall oder Glas bestehen. Beispielhafte Ausgestaltungsvarianten dieser Form sind gerillte oder gewellte, plattenartige Körper oder sternförmig ausgestaltete Körper, die aufgrund ihrer Geometrie Ausnehmungen zur Aufnahme der Fasern oder Kapillaren aufweisen. Das Ablegen von Fasern in der Form kann manuell oder maschinell erfolgen. Nach dem Ablegen werden die Grünfasern in der Form gesintert und gepottet.

Für die Pottung stehen unterschiedliche Techniken, wie beispielsweise Schleudertechnik, Eingießen oder Tampondruck zur Verfügung. Nachdem die Pottungsmasse, vorzugsweise eine Keramik oder ein Polymer, ausgehärtet ist, können die Hohlfaser- bzw. Kapillarenden abgeschnitten werden, so dass die Lumina der Fasern offen sind. Das Abschneiden der Faserenden kann mit einer geeigneten Trennmethode, beispielsweise mit einer Diamantdrahtsäge, mittels Wasserstrahltechnik oder mittels Laserschneidetechnik erfolgen.

Mit dem vorgeschlagenen Verfahren lässt sich die Herstellung von Hohlfaser- oder Kapillarmembranmodulen deutlich vereinfachen. Die Handhabbarkeit von Grünfasern und das Ablegen in eine Form sind deutlich einfacher und führen zu weitaus weniger Brüchen als das Einbringen von gesinterten Fasern in eine beispielsweise als Lochplatte ausgebildete Form bzw. das Einführen eines gesinterten Faserbündels in einen zylinderförmigen Körper. Überraschenderweise hat sich hierbei gezeigt, dass sich keramische Hohlfasern bzw. Kapillaren beim Sintern nicht miteinander verbinden, sondern separiert bleiben. Aufgrund dieser überraschenden Erkenntnis der Erfinder wird die Herstellung eines Hohlfaser- oder Kapillarmembranmoduls mit dem vorliegenden Verfahren erst möglich.

Durch das Verfahren können Faserbrüche sowie sonstige Defekte bei der Herstellung des Moduls vermieden werden. Die Fasern können beispielsweise als Bündel in die strukturierte Form abgelegt werden. Beim anschließenden Trocken- und Sinterprozess kann ein Verziehen bzw. Kräuseln der Fasern aufgrund der äußeren Formgebung der Form vermieden werden.

Bei Einsatz eines keramischen Pottungsmaterials kann zudem auf den Einsatz von zwei getrennten thermischen Behandlungsschritten verzichtet werden. Das Sintern der Hohlfasern bzw. Kapillaren sowie die Verfestigung bzw. das Sintern des keramischen Pottungsmaterials können vielmehr im gleichen thermischen Behandlungsschritt erfolgen. Hierbei müssen die thermischen Ausdehnungskoeffizienten der Materialien für die Hohlfasern bzw. Kapillaren und der Pottungsmasse aufeinander abgestimmt sein, um die Ausbildung übermäßiger mechanischer Spannungen zu vermeiden.

Die Hohlfasern oder Kapillaren können in bekannter Weise als Grünfasern bzw. im Grünzustand bereitgestellt werden. Sie können über Spinnen bzw. Extrusion von anorganischen oder Metall-organischen Massen, wie Polymervorstufen oder anorganische binderhaltige Suspensionen, von wässrigen Lösungen von Salzen oder von mit Pulver gefüllten Sol/Gelen erhalten werden. Derartig hergestellte Hohlfasern oder Kapillaren sind im Grünzustand flexibel und gut handhabbar. Im gesinterten bzw. pyrolysierten Zustand können die Hohlfasern oder Kapillaren, wie sie beim vorliegenden Verfahren eingesetzt werden, aus oxidischen Materialien wie ZrO₂, TiO₂, α-Al₂O₃, γ-Al₂O₃, 3Al₂O₃*2SiO₂ (Mullit), MgAl₂O₄ (Spinell), SiO₂, aus Perowskiten, Hydroxylapatit, Zeolithen, nichtoxidischen Materialien wie SiBNC, SiC, BN, Si₃N₄, C, sowie aus Metallen wie Kupfer, Titan, Eisen, speziellen Edelstählen oder Übergangsmetalllegierungen bestehen. Diese Aufzählung ist selbstverständlich nicht abschließend. Dem Fachmann sind geeignete Materialien zur Herstellung keramischer Hohlfasern oder Kapillaren bekannt.

Das Material der Pottungsmasse kann aus dem gleichen Material wie die Hohlfasern bzw. Kapillaren bestehen oder aus einem anderen geeigneten anorganischen oder organischen Material. Die Ausdehnungskoeffizienten von Hohlfasern bzw. Kapillaren und Pottmaterial sollten jedoch aufeinander abgestimmt sein. Vorzugsweise ist der Unterschied der Ausdehnungskoeffizienten nicht größer als 5x10⁻⁶ K⁻¹, wobei ein höherer thermischer Ausdehnungskoeffizient des Fasermaterials leichter toleriert werden kann, als der umgekehrte Fall.

Die Ausdehnungskoeffizienten bekannter Materialien für die Pottungsmasse bzw. als Material für die Hohlfasern bzw. Kapillaren betragen für Al₂O₃ 8x10⁻⁶K⁻¹, für ZrO₂ (Y₂O₃-stabilisiert) 10x10⁻⁶K⁻¹, für SiO₂ 0,5x10⁻⁶K⁻¹, für TiO₂ 8-10x10⁻⁶K⁻¹ und für SiC 4,5x10⁻⁶K⁻¹. Aus diesen Beispielen ist ersichtlich, dass sich zahlreiche Materialien finden lassen, die der obigen Bedingung eines geringen Unterschiedes im thermischen Ausdehnungskoeffizienten genügen.

Neben einem thermischen Prozessschritt, wie beispielsweise Trocknung, kann eine Verfestigung der Pottungsmasse zum entsprechenden Grünkörper durch eine Veränderung der Oberflächenladung der keramischen Pulverpartikel dieser Pottungsmasse hervorgerufen werden. Eine derartige Veränderung der Oberflächenladung lässt sich beispielsweise durch enzymatische Freisetzung von Protonen oder Hydroxylionen hervorrufen.

Für den geplanten Einsatz des verfahrensgemäß hergestellten Moduls als verfahrenstechnischer Apparat in einer Anlage zur Flüssigfiltration oder Gasseparation wird die Form mit den darin vergossenen Hohlfasern bzw. Kapillaren in ein geeignetes Gehäuse eingebracht. Die Geometrie der Form mit den Hohlfasern bzw. Kapillaren und des Gehäuses sind derart aufeinander abgestimmt, dass ein so genannter Feedraum für die Zuführung des zu filternden Mediums sowie ein so genannter Permeatraum für das Filtrat gebildet werden, die durch in dem Gehäuse angeordnete Dichtungen außerhalb der Membran- bzw. Filterfläche, die in bekannter Weise durch die Seitenwandungen der Hohlfasern bzw. Kapillaren gebildet wird, gasdicht voneinander getrennt werden. Das Gehäuse kann als dichte Keramik oder als Metallkartuschensystem ausgeführt sein.

In einer alternativen Ausführungsform können Grünfasern, Form und ein Keramikgehäuse in einem einzigen Schritt mit einer geeigneten Vergussmasse aus Keramik gepottet und gemeinsam gesintert werden (Cofiring). Bei dieser Herstellungstechnik muss das Größenverhältnis zwischen Form und Länge der Grünfasern aneinander angepasst sein, so dass der Schrumpf der Fasern bei der anschließenden Sinterung berücksichtigt wird.

Ein derart hergestelltes Modulelement kann zusätzlich mit weiteren Beschichtungen aus Keramik, wie beispielsweise α-Al₂O₃, γ-Al₂O₃, MgAl₂O₄, TiO₂, ZrO₂, usw., mit Beschichtungen aus Metall oder Metalllegierungen, wie beispielsweise Übergangsmetallen aus den Gruppen 4-6, 10, 11, insbesondere Legierungen, die diese Übergangsmetalle enthalten, Laves Phasen, metallischen Gläsern oder Polymeren wie beispielsweise Polyimid versehen werden. Durch diese zusätzliche Beschichtung wird erreicht, dass Gastrennmembranen erzeugt werden können und/oder die Dichtigkeit der Pottung erhöht wird.

Ein mit dem vorliegenden Verfahren hergestelltes Hohlfaser- oder Kapillarmembranmodul bzw. die vorgeschlagene Vorrichtung mit einem derartigen Modul lässt sich in vielen technischen Anwendungsgebieten einsetzen. Beispiele hierfür sind die Trocknung oder Befeuchtung von Luft (Klimatechnik), die Katalyse, die Reinigung von heißen Gasen, die Gastrennung, die Pervaporation, die Dampfpermeation, die heterogene Katalyse, ein Einsatz in Membranreaktoren, in Wärmetauschern, in Kontaktoren, in Brennstoffzellen, als Vorfilter zur Klärung, die Filtration aggressiver Medien wie heißen Säuren- und Laugen oder Lösungsmitteln, die Filtration abrasiver, giftiger, mikrobiologisch oder anderweitig belasteter Flüssigkeiten sowie die Aufarbeitung von Emulsionen.

In der vorangehenden Beschreibung wurde bereits verdeutlicht, dass unterschiedliche Materialkombinationen Faser/Pottungsmasse einsetzbar sind. So können als Hohlfaser- bzw. Kapillar- und Pottungsmaterial sowohl oxidische als auch nichtoxidische bzw. metallische Materialien eingesetzt werden. Hohlfasern bzw. Kapillaren (im Folgenden als zu Vereinfachung nur als Fasern bezeichnet) und Pottung können aus dem selben oder aus verschiedenen Materialien bestehen. Die Porosität des Pottmaterials muss kleiner sein als die Porosität der Fasern. Bei einer Kombination eines keramischen Materials für die Fasern sowie eines Polymers für die Pottung können als Fasermaterial wiederum oxidische und nicht oxidische bzw. metallische Materialien eingesetzt werden. Als Pottungsmaterialien können in diesem Fall Polymere oder organische Materialien, wie beispielsweise Epoxidharze (gefüllte und ungefüllte Systeme) oder Silikone eingesetzt werden. Auch hier muss die Porosität des Pottmaterials kleiner sein als die Porosität der Fasern.

Vorzugsweise weist auch die aufnehmende Form einen gleichen oder ähnlichen thermischen Ausdehnungskoeffizienten auf wie die Fasern und das Pottmaterial. Auf diese Weise werden Spannungen bei der Herstellung sowie bei einem späteren Einsatz des Moduls unter hohen Temperaturen vermieden.

Eine vorgeschlagene Vorrichtung umfasst ein gemäß dem Verfahren hergestelltes Modul in einem Gehäuse. Die Form mit den Fasern und das Gehäuse sind derart geometrisch aufeinander abgestimmt, dass ein Feed- und ein Permeatraum gebildet werden, die durch Dichtungen oder ein Dichtmaterial zwischen der Form und dem Gehäuse außerhalb der Membranfläche gasdicht voneinander abgeschlossen sind. Das Gehäuse weist Öffnungen für die Lumenzu- und -abfuhr der Fasern sowie für eine Außenraumzu- und -abfuhr zum bzw. vom Inneren der Form auf, die vorzugsweise als Anschlüsse ausgebildet sind. In gleicher Weise bildet die Form Öffnungen, die eine Zu- bzw. Abfuhr von Gas oder Flüssigkeit über die entsprechenden Außenraumöffnungen des Gehäuses zu den Außenwandungen der Fasern ermöglichen.

Das Gehäuse mit der eingepassten Form ist dabei vorzugsweise als Kartuschensystem ausgebildet, wobei Form und Kartusche zwischen Lumenseite und Außenseite der Fasern stopfbuchsenartig abgedichtet sind. Die Kartusche dient zur Adaptierung der Vorrichtung an ein Gesamtsystem. Der Innenraum der aufnehmenden Form ist über die angegebenen Öffnungen im Umfang der Form zugänglich. Das Gehäuse ist vorzugsweise aus metallischem Material gebildet.

### Kurze Beschreibung der Zeichnungen

Das Verfahren sowie eine Vorrichtung werden nachfolgend ohne Beschränkung des vorangehend erläuterten Erfindungsgedankens anhand von Ausführungsbeispielen in Verbindung mit den Zeichnungen nochmals kurz erläutert. Hierbei zeigen:
- Fig. 1: ein erstes Beispiel einer Form mit darin abgelegten Hohlfasern;
- Fig. 2: ein zweites Beispiel einer Form mit eingepotteten Hohlfasern;
- Fig. 3: ein drittes Beispiel einer Form mit eingepotteten Hohlfasern; und
- Fig. 4: ein Beispiel für eine Ausgestaltung einer Vorrichtung als Kartuschensystem.

### Wege zur Ausführung der Erfindung

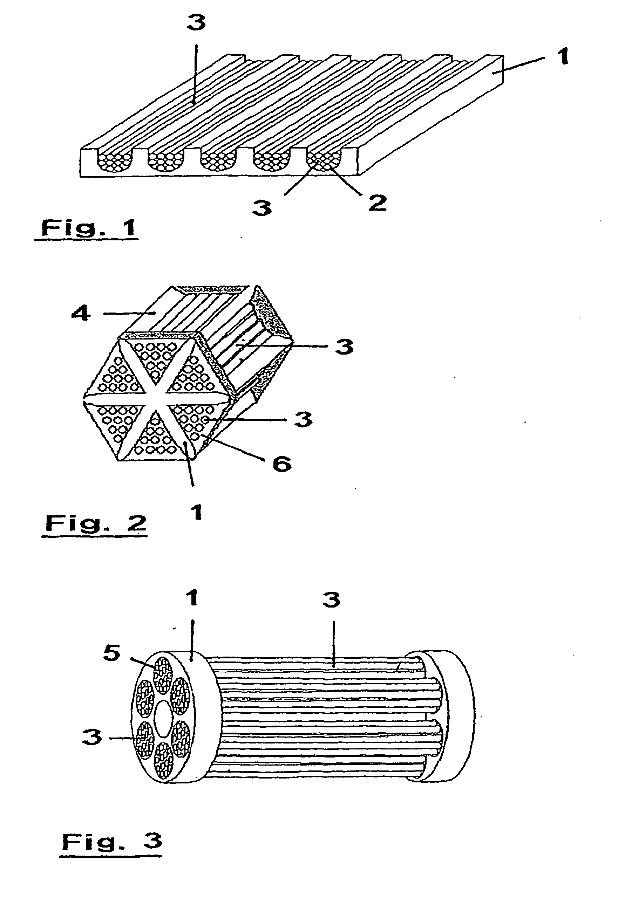

Die Figuren 1 - 3 zeigen verschiedene beispielhafte Ausgestaltungen einer Form 1, wie sie beim vorliegenden Verfahren zum Einsatz kommen kann. Bei dem Beispiel der Figur 1 ist die Form 1 als Rillenplatte aus Keramik oder Metall ausgeführt. In die Rillen 2 dieser Form werden die Hohlfasern 3 im Grünzustand vorzugsweise gebündelt eingelegt, wie dies in der Figur zu erkennen ist. Anschließend oder gleichzeitig mit dem folgenden Pottungsschritt werden diese Fasern 3 mit der Form 1 verbunden.

Die Form 1 der Figur 2 ist sternförmig, vorzugsweise aus poröser Keramik oder Metall, ausgeführt. In die durch die Sternform gebildeten Ausnehmungen 4 werden die Hohlfasern 3 im Grünzustand eingelegt, gesintert und gleichzeitig oder anschließend gepottet.

Figur 3 zeigt ein drittes Beispiel, bei dem die Form 1 aus zwei mit Lochöffnungen 5 versehenen Platten gebildet ist. Die Grünfasern werden in diese Öffnungen 5 eingelegt und anschließend gesintert und verpottet. Hierdurch wird ein Modul in Multikanalelementform gebildet, wie dies aus der Figur 3 ersichtlich ist.

In allen drei Beispielen werden die Fasern 3 nach dem Pottungsschritt an ihren über die Form 1 überstehenden Enden abgeschnitten, um die Faserlumen freizulegen.

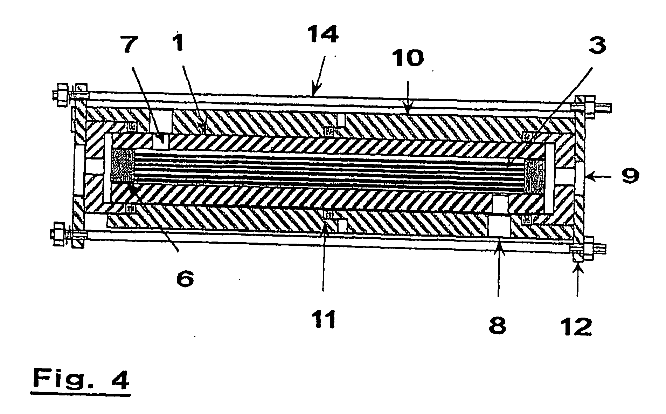

Figur 4 zeigt schließlich ein Beispiel für eine Ausgestaltung einer Vorrichtung in Form eines Kartuschensysteans zum Einbau in eine Anlage zur Flüssigfiltrierung oder Gasseparation. Das mit dem vorliegenden Verfahren hergestellte Kapillar- oder Hohlfasermembranmodul besteht in diesem Beispiel aus einem zylinderförmigen Formkörper 1 aus Glas oder Keramik. In dieser Form 1 sind die keramischen Hohlfasern oder Kapillaren 3 an ihren Enden eingepottet. Die Pottungsmasse ist mit dem Bezugszeichen 6 bezeichnet. Das Material der Form 1 hat idealerweise den gleichen oder einen ähnlichen Ausdehungskoeffizienten wie die keramischen Hohlfasern bzw. Kapillaren 3, so dass keine Wärmespannungen entstehen.

Die Form 1 trägt im Bereich ihres vorderen und hinteren Endes an ihrem Umfang mindestens je eine Zugangsöffnung 7, über die Fluide in das Innere der Form 1 und damit an die Außenseiten der keramischen Hohlfasern oder Kapillaren 3 gelangen bzw. aus dem Inneren der Form 1 abgeführtwerden können. Über diese Form 1 ist eine Kartusche 10, vorzugsweise aus Metall oder einem hochtemperaturstabilen Kunststoff geschoben, die alle Anschlüsse für die Lumenzu und -abfuhr sowie die Außenraumzu und -abfuhr trägt. Die Anschluss- öffnungen für die Außenraumzu und -abfuhr 8 befinden sich genau über den Zugangsöffnungen 7 der Form. Die Anschlüsse können als Gewinde oder Schweißstutzen ausgeführt sein. Die Lumenanschlüsse 9 sind stirnseitig am Gehäuse 10 angebracht und schaffen den Zugang zu den Lumen der Hohlfasern bzw. Kapillaren 3. Auch diese Anschlüsse sind vorzugsweise als Gewinde oder Schweißstutzen ausgebildet. Der Durchmesser der Form 1 ist an den Innendurchmesser der Kartusche 10 angepasst, so dass nur ein geringes Spiel zwischen beiden vorhanden ist. Vorzugsweise sind beide formschlüssig miteinander verbunden. Zwischen der Form 1 und der Innenwandung der Kartusche 10 sind Dichtungen 11, bevorzugt quadratische Dichtringe oder O-Ring-Dichtungen vorgesehen, um einerseits eine Abdichtung zwischen Lumenzu- und -abfuhr sowie Außenraumzu- und -abfuhr herzustellen. Die Dichtringe ermöglichen andererseits, dass eine Abdichtung zwischen Außenraumzu- und Außenraumabfuhr gewährleistet ist. Die Dichtringe 11 können beispielsweise aus hochtemperaturtoleranten Polymeren, die vorzugsweise auch chemikalientolerant sind, wie beispielsweise Polyimiden, PTFE, Viton®, Kalrez®, Silikon oder aus Graphit oder Metallen bestehen.

Neben Dichtringen ist es auch möglich, den gesamten Zwischenraum zwischen Formkörper 1 und Kartusche 10 - mit Ausnahme der Ein- und Auslassöffnungen 7, 8 für den Innenraum des Formkörpers 1 - mit einem Dichtmaterial zu füllen, so dass nur ein minimaler Totraum entsteht.

Die Erzeugung der Presskraft auf die Dichtringe 11 kann beispielsweise mit Überwurfmuttern, über Zuganker oder Schrauben erfolgen, wobei die Wärmebewegungen über Federsysteme ausgeglichen werden. Die Figur zeigt den Einsatz einer Pressplatte 12, mittels der ein stopfenartig ausgebildeter Körper 13 auf die äußeren Dichtringe 11 zwischen Formkörper 1 und Kartusche 10 gepresst wird. Die beiden Pressplatten 12 werden über Gewindestangen 14 mit Muttern zusammen gehalten.

Ein Kartuschensystem wie das der Figur 4 bietet den Vorteil, dass durch die aufnehmende Form 1 keine Wärmespannungen in den Kapillaren oder Hohlfasern 3 entstehen und gleichzeitig eine einfache Adaption des Moduls an ein Gesamtsystem, beispielsweise eine Produktionsanlage, über Rohranschlüsse möglich ist.

Im Folgenden werden drei beispielhafte Ausführungsvarianten für das Verfahren zur Herstellung eines Hohlfasermembranmoduls angegeben.

Beim ersten Beispiel werden α-Al₂O₃-Grünfasern eingesetzt, die nach dem Lyocellverfahren entsprechend der DE 44 26 966 A1 hergestellt werden. Die Fasern werden im Grünzustand in Bündeln auf eine gewellte Form aus poröser Al₂O₃-Keramik aufgelegt, wie sie beispielsweise aus der Figur 1 ersichtlich ist. Die Grünfasern werden in dieser Form bei 1450°C gesintert. Nach dem Sintervorgang werden die Faserenden mit einer zweikomponentigen Klebemasse auf Epoxybasis (Biresin, Härter HM, Fa. SIKA Chemie) eingegossen (statisches Potten) und die Vergussmasse 24 h an Luft ausgehärtet. Danach werden die Hohlfasern zusammen mit der Form so geschnitten, dass die Lumina der Fasern offen sind. Mehrere solcher Formen mit Hohlfasern werden dann in ein Gehäuse überführt, wobei Feed- und Permeatraum durch Kunststoffdichtungen gasdicht voneinander getrennt sind.

In einem zweiten Verfahren werden ZrO₂-Grünfasern eingesetzt, die ebenfalls nach dem Lyocellverfahren hergestellt werden. Die Fasern werden im Grünzustand in Bündeln in eine sternförmige Form aus Al₂O₃-Keramik so eingebracht, dass die Grünfasern über die Begrenzung der Form herausreichen. Der Überstand der Grünfasern wird zur Kompensation der Schrumpfrate beim Sintervorgang gewählt (vgl. Figur 2). Die eingebrachten Grünfasern werden in der Form bei 1200°C gesintert. Nach dem Sintervorgang werden die Faserenden mit Silikonklebemasse (Silicone AP, Dow Corning) eingegossen (statisches Potten) und die Vergussmasse 24 h an Luft ausgehärtet. Danach werden die Hohlfasern zusammen mit der Form so geschnitten, dass die Lumina der Fasern offen sind. Die Form mit Hohlfasern wird dann in ein Gehäuse überführt, wobei Feed- und Permeatraum durch Kunststoffdichtungen gasdicht voneinander getrennt sind.

Bei der letzten beispielhaften Ausführungsform werden α-Al₂O₃-Grünfasern nach dem Monsantoverfahren (DE 2919560 A1) hergestellt. Die Fasern werden im Grünzustand in Bündeln auf eine gewellte Al₂O₃-Keramik aufgelegt, wie dies aus Figur 1 ersichtlich ist. Die Grünfasern werden in der Form bei 1450°C gesintert. Nach dem Sintervorgang werden die Faserenden mit einer keramischen Vergussmasse eingegossen. Die Vergussmasse hat folgende Zusammensetzung:
1180g Al₂O₃ (CL 370 C Alcoa)
1,76g 4,5-Dihydroxy-1,3-Benzoldisulfonsäure
3,54g Harnstoff
109g Bidestilliertes Wasser.

Unmittelbar vor dem Eingießen werden 2000 Einheiten Urease (EC 3.5.1.5) zugesetzt, die eine rasche Verfestigung der Vergussmasse bewirkt.

Nach dem Pottungsvorgang wird die Anordnung bei 1450°C kalziniert. Danach werden die Hohlfasern zusammen mit der Form so geschnitten, dass die Lumina der Fasern offen sind. Mehrere solcher Formen mit Hohlfasern werden dann in ein Gehäuse überführt, wobei Feed- und Permeatraum durch temperaturstabile Dichtungen, beispielsweise aus Graphit, Metallen oder HT-Polymeren, gasdicht voneinander getrennt sind. Man erhält ein Hohlfasermodul, das sich besonders für den Hochtemperatureinsatz eignet.

Wird die keramische Pottungsmasse so formuliert, dass die Schrumpfraten von Fasern und Pottungsmasse annähernd gleich sind, dann ist nach dem Ablegen der Grünfasern in der Form auch eine sofortige Pottung der Fasern im Grünzustand möglich. Fasern und Pottungsmaterial können dann in einem einzigen thermischen Behandlungsschritt (Cofiringprozess) in der Form gesintert werden.

### Bezugszeichenliste

- 1: Form bzw. Formkörper
- 2: Rillen
- 3: Hohlfasern bzw. Kapillaren
- 4: Ausnehmungen
- 5: Lochöffnungen
- 6: Pottungsmasse
- 7: Zugangsöffnungen der Form
- 8: Anschlüsse für Außenraumenzu- und -abfuhr
- 9: Lumenanschlüsse
- 10: Gehäuse bzw. Kartusche
- 11: Dichtungen
- 12: Pressplatte
- 13: Stopfen
- 14: Gewindestangen mit Muttern

## Patentansprüche

1. Verfahren zur Herstellung eines Hohlfaser- oder Kapillarmembranmoduls, bei dem Hohlfasern oder Kapillaren (3) aus einem keramischen oder keramikhaltigen Material in eine zur Aufnahme der Hohlfasern oder Kapillaren (3) strukturierte Form (1) eingebracht und durch Vergießen mit einer Vergussmasse mit der Form (1) verbunden werden, wobei die Hohlfasern oder Kapillaren (3) in ungesintertem Zustand in die Form (1) eingelegt und in der Form (1) gesintert werden.

2. Verfahren nach Anspruch 1,
**dadurch gekennzeichnet,**
**dass** eine Vergussmasse aus einem keramikhaltigen Material eingesetzt wird.

3. Verfahren nach Anspruch 2,
**dadurch gekennzeichnet,**
**dass** das Sintern der Hohlfasern oder Kapillaren (3) und das Aushärten der Vergussmasse mit dem gleichen thermischen Prozessschritt erfolgen.

4. Verfahren nach Anspruch 2 oder 3,
**dadurch gekennzeichnet,**
**dass** das Material für die Vergussmasse und das Material für die Hohlfasern oder Kapillaren (3) derart gewählt werden, dass sich die thermischen Ausdehnungskoeffizienten um weniger als 5*10⁻⁶ K⁻¹ unterscheiden.

5. Verfahren nach Anspruch 4,
**dadurch gekennzeichnet,**
**dass** das Material für die Vergussmasse und das Material für die Hohlfasern oder Kapillaren (3) derart gewählt werden, dass der thermische Ausdehnungskoeffizient des Materials für die Hohlfasern oder Kapillaren (3) größer oder gleich dem thermischen Ausdehnungskoeffizienten des Materials für die Vergussmasse ist.

6. Verfahren nach einem der Ansprüche 2 bis 5,
**dadurch gekennzeichnet,**
**dass** eine Verfestigung der Vergussmasse durch eine Veränderung der Oberflächenladung von keramischen Pulverpartikeln herbeigeführt wird, die Bestandteil der Vergussmasse sind.

7. Verfahren nach Anspruch 1,
**dadurch gekennzeichnet,**
**dass** eine Vergussmasse aus einem polymeren oder organischen Material eingesetzt wird.

8. Verfahren nach einem der Ansprüche 1 bis 7,
**dadurch gekennzeichnet,**
**dass** die Hohlfasern oder Kapillaren (3) gebündelt in die Form (1) eingelegt werden.

9. Verfahren nach einem der Ansprüche 1 bis 8,
**dadurch gekennzeichnet,**
**dass** eine Form (1) aus poröser Keramik oder einem anderen anorganischen Material eingesetzt wird.

10. Verfahren nach einem der Ansprüche 1 bis 9,
**dadurch gekennzeichnet,**
**dass** eine Form (1) eingesetzt wird, die langgestreckte Ausnehmungen zur Aufnahme der Hohlfasern oder Kapillaren (3) aufweist.

11. Verfahren nach einem der Ansprüche 1 bis 10,
**dadurch gekennzeichnet,**
**dass** die Form (1) mit den Hohlfasern oder Kapillaren (3) in einem Gehäuse (10) mit einer oder mehreren Dichtungen (11) befestigt wird, um einen Feed- und einen Permeatraum zu bilden, die über die Dichtung(en) (11) gasdicht voneinander abgetrennt werden.

12. Verfahren nach Anspruch 11,
**dadurch gekennzeichnet,**
**dass** die Form (1) mit den Hohlfasern oder Kapillaren (3) mit der Vergussmasse in dem Gehäuse (10) eingegossen und zusammen mit dem Gehäuse (10) einem thermischen Prozessschritt zum Sintern der Hohlfasern oder Kapillaren (3) und zum Aushärten der Vergussmasse unterzogen wird.

13. Verfahren nach einem der Ansprüche 1 bis 12,
**dadurch gekennzeichnet,**
**dass** die Form (1) mit den Hohlfasern oder Kapillaren (3) und der Pottung mit einer oder mehreren Beschichtungen versehen wird.

## Claims

1. Method of producing a hollow fibre or capillary membrane module, in which hollow fibres or capillaries (3) of a ceramic material or material containing ceramic are brought into a structured mould (1) to receive the hollow fibres or capillaries (3) and are joined to the mould (1) by casting with a casting compound, wherein the hollow fibres or capillaries (3) are placed into the mould (1) in unsintered state and are sintered in the mould (1).

2. Method according to Claim 1, **characterised in that** a casting compound made of a material containing ceramic is used.

3. Method according to Claim 2, **characterised in that** sintering of the hollow fibres or capillaries (3) and curing of the casting compound occur with the same thermal process step.

4. Method according to Claim 2 or 3, **characterised in that** the material for the casting compound and the material for the hollow fibres or capillaries (3) are selected in such a manner that the coefficients of thermal expansion differ by less than 5*10⁻⁶ K⁻¹.

5. Method according to Claim 4, **characterised in that** the material for the casting compound and the material for the hollow fibres or capillaries (3) are selected in such a manner that the coefficient of thermal expansion of the material for the hollow fibres or capillaries (3) is higher than or equal to the coefficient of thermal expansion of the material for the casting compound.

6. Method according to one of Claims 2 to 5, **characterised in that** solidification of the casting compound is caused by a change in the surface charge of ceramic powder particles, which are a constituent of the casting compound.

7. Method according to Claim 1, **characterised in that** a casting compound made of a polymer or organic material is used.

8. Method according to one of Claims 1 to 7, **characterised in that** the hollow fibres or capillaries (3) are inserted into the mould (1) in bundle form.

9. Method according to one of Claims 1 to 8, **characterised in that** a mould (1) made of porous ceramic or another inorganic material is used.

10. Method according to one of Claims 1 to 9, **characterised in that** a mould (1) is used, which has elongated recesses to receive the hollow fibres or capillaries (3).

11. Method according to one of Claims 1 to 10, **characterised in that** the mould (1) with the hollow fibres or capillaries (3) is fastened in a housing (10) with one or more seals (11) in order to form a feed area and a permeate area, which are separated from one another in a gastight manner via the seal(s) (11).

12. Method according to Claim 11, **characterised in that** the mould (1) with the hollow fibres or capillaries (3) is cast in the housing (10) with the casting compound and together with the housing (10) is subjected to a thermal process step to sinter the hollow fibres or capillaries (3) and cure the casting compound.

13. Method according to one of Claims 1 to 12, **characterised in that** the mould (1) with the hollow fibres or capillaries (3) and the potting is provided with one or more coatings.

## Revendications

1. Procédé pour fabriquer un module membranaire de fibres creuses ou de capillaires, selon lequel des fibres creuses ou des capillaires (3) en un matériau céramique ou contenant de la céramique sont introduits dans un moule structuré pour recevoir les fibres creuses ou les capillaires (3) et sont liés au moule en scellant une masse de scellement, les fibres creuses ou les capillaires (3) étant insérés dans le moule (1) à l'état non fritté et étant frittés dans le moule (1).

2. Procédé selon la revendication 1,
**caractérisé en ce qu'**
on utilise une masse de scellement composée d'un matériau contenant de la céramique.

3. Procédé selon la revendication 2,
**caractérisé en ce que**
le frittage des fibres creuses ou des capillaires (3) et le durcissement de la masse de scellement ont lieu dans la même étape de processus thermique.

4. Procédé selon la revendication 2 ou 3,
**caractérisé en ce que**
le matériau destiné à la masse de scellement et le matériau destiné aux fibres creuses ou aux capillaires (3) sont choisis de telle manière que les coefficients de dilatation thermiques ont une différence inférieure à 5*10⁻⁶ K⁻¹.

5. Procédé selon la revendication 4,
**caractérisé en ce que**
le matériau destiné à la masse de scellement et le matériau destiné aux fibres creuses ou aux capillaires (3) sont choisis de telle manière que le coefficient de dilatation thermique du matériau destiné aux fibres creuses ou aux capillaires (3) est supérieur ou égal au coefficient de dilatation thermique du matériau destiné à la masse de scellement.

6. Procédé selon l'une des revendications 2 à 5,
**caractérisé en ce qu'**
on obtient un renforcement de la masse de scellement en modifiant la charge superficielle des particules de poudre céramique qui font partie de la masse de scellement.

7. Procédé selon la revendication 1,
**caractérisé en ce qu'**
on utilise une masse de scellement composée d'un matériau polymère ou organique.

8. Procédé selon l'une des revendications 1 à 7,
**caractérisé en ce que**
les fibres creuses ou les capillaires (3) sont introduits en faisceau dans le moule (1).

9. Procédé selon l'une des revendications 1 à 8,
**caractérisé en ce qu'**
on utilise un moule (1) en céramique poreuse ou en un autre matériau inorganique.

10. Procédé selon l'une des revendications 1 à 9,
**caractérisé en ce qu'**
on utilise un moule (1) qui présente des cavités allongées destinées à recevoir les fibres creuses ou les capillaires (3).

11. Procédé selon l'une des revendications 1 à 10,
**caractérisé en ce que**
le moule (1) comportant les fibres creuses ou les capillaires (3) est fixé dans un boîtier (10) muni d'une ou de plusieurs garnitures (11) afin de constituer un espace de charge et un espace de perméat séparés l'un de l'autre de façon étanche au gaz au moyen de la ou des garnitures (11).

12. Procédé selon la revendication 11,
**caractérisé en ce que**
le moule (1) comportant les fibres creuses ou les capillaires (3) est scellé dans le boîtier (10) à la masse de scellement et est soumis ainsi que le boîtier (10) à une étape de processus thermique destinée à fritter les fibres creuses ou les capillaires (3) et à durcir la masse de scellement.

13. Procédé selon l'une des revendications 1 à 12,
**caractérisé en ce que**
le moule (1) comportant les fibres creuses ou les capillaires (3) et le remplissage est munie d'un ou de plusieurs revêtements.
